# EUROPÄISCHE PATENTSCHRIFT

(11) **EP 4 534 276 B1**
(45) Veröffentlichungstag und Bekanntmachung des Hinweises auf die Patenterteilung: **09.12.2026**
(21) Anmeldenummer: 23201792.1
(22) Anmeldetag: 05.10.2023
(51) Int. Cl.: F03D 1/06, B29D 99/00, C08J 5/12, B29L 31/08, B29C 65/50

(54) **VERFAHREN ZUM HERSTELLEN EINES WINDENERGIEANLAGEN-ROTORBLATTES UND VERWENDUNG EINES WINDENERGIEANLAGEN-ROTORBLATT-HINTERKANTENKAMMS**
METHOD FOR PRODUCING A WIND TURBINE BLADE AND USE OF WIND TURBINE BLADE TRAILING EDGE COMB
MÉTHODE DE FABRICATION D'UNE PALE D'ÉOLIENNE ET UTILISATION D'UN PEIGNE DE BORD DE FUITE DE PALE D'ÉOLIENNE

(43) Veröffentlichungstag der Anmeldung: 09.04.2025
(73) Patentinhaber: Wobben Properties GmbH, 26607 Aurich (DE)
(72) Erfinder: Spieth, Falk, 26603 Aurich (DE)
(74) Vertreter: Eisenführ Speiser

(56) Entgegenhaltungen:
- US-A1- 2007 077 150
- US-A1- 2014 072 440
- US-A1- 2017 276 117

## Beschreibung

Die vorliegende Erfindung betrifft ein Verfahren zum Herstellen eines Windenergieanlagen-Rotorblattes und eine Verwendung eines Windenergieanlagen-Rotorblatt-Hinterkantenkamms.

Zur Reduzierung des durch die Rotorblätter einer Windenergieanlage erzeugten Lärms wird ein Hinterkantenkamm (trailing edge separation) an der Hinterkante eines Rotorblattes vorgesehen. Dieser Hinterkantenkamm weist typischerweise eine Mehrzahl von Zacken auf. Das Vorhandensein des Hinterkantenkamms bewirkt, dass der durch die Windenergieanlage und insbesondere durch das Rotorblatt erzeugte Lärm reduziert werden kann. Die Herstellung derartiger Rotorblätter ist jedoch aufwändig und kostenintensiv.

US 2017/0276117 A1 zeigt ein Verfahren zum Herstellen eines Windenergieanlagen-Rotorblattes, welches eine Hinterkante aufweist. Die Hinterkante weist einen Hinterkantenkamm auf.

US 2014/0072440 A1 beschreibt ein Rotorblatt einer Windenergieanlage mit einem Hinterkantenkamm.

US 2007/0077150 A1 beschreibt ein Rotorblatt einer Windenergieanlage mit einem Hinterkantenkamm.

Es ist daher eine Aufgabe der vorliegenden Erfindung, Verfahren zum Herstellen eines Windenergieanlagen-Rotorblattes mit einem verbesserten Hinterkantenkamm sowie ein Rotorblatt mit einem entsprechend verbesserten Hinterkantenkamm vorzusehen.

Diese Aufgabe wird durch Verfahren zum Herstellen eines Windenergieanlagen-Rotorblattes nach Anspruch 1 und eine Verwendung eines Windenergieanlagen-Rotorblatt-Hinterkantenkamms gemäß Anspruch 2 gelöst.

Somit wird ein Verfahren zum Herstellen eines Windenergieanlagen-Rotorblattes vorgesehen, welches eine Hinterkante aufweist. Ein Klebeband mit einer ersten und zweiten Klebefläche wird vorgesehen. Eine Mehrzahl von pultrudierten Stäben wird auf der zweiten Klebefläche des Klebebandes aufgeklebt, und der Hinterkantenkamm wird auf oder an einer Hinterkante des Rotorblattes mittels der ersten Klebefläche aufgeklebt.

Gemäß einem Aspekt der Erfindung kann das Klebeband, nachdem die Mehrzahl der pultrudierten Stäbe auf der zweiten Klebeseite platziert sind, aufgerollt und das aufgerollte Klebeband beim Aufkleben auf die Hinterkante des Rotorblattes abgerollt werden.

Ferner wird ein Windenergieanlagen-Rotorblatt-Hinterkantenkamm mit einem doppelseitigen Klebeband mit einer ersten und zweiten Klebeseite vorgesehen. Auf der ersten Klebeseite des doppelseitigen Klebebandes wird eine Mehrzahl von pultrudierten Stäben platziert. Die zweite Klebeseite dient dazu, den Hinterkantenkamm auf eine Hinterkante eines Rotorblattes zu kleben.

Mit einem derartigen Hinterkantenkamm kann ein Rotorblatt auf einfache Art und Weise modifiziert werden, um den durch das Rotorblatt erzeugten Schall zu reduzieren. Insbesondere ist die Handhabung eines derartigen Hinterkantenkamms bestehend aus einem Klebeband vorteilhaft, weil das Klebeband flexibel ist und damit eine einfache Montage auf dem Rotorblatt erlaubt.

Die pultrudierten Stäbe können vorab hergestellt und z.B. mittels einer Separiermaschine nebeneinander ausgerichtet und auf einer Klebeseite des doppelseitigen Klebebandes geklebt werden. Da lediglich eine der beiden Klebeseiten des Klebebandes mit der Mehrzahl von pultrudierten Stäben belegt ist und die andere Klebeseite mittels einer entsprechenden Abdeckung nicht klebt, kann das Klebeband mit den sich darauf befindlichen pultrudierten Stäben aufgewickelt werden. Dies führt zu einer erheblichen Verbesserung der Handhabbarkeit des Hinterkantenkamms.

Somit kann ein flexibler Hinterkantenkamm erreicht werden, der auf einfache Art und Weise montiert werden kann.

Dadurch, dass lediglich ein Klebeband verwendet wird, führt ein Aufbringen des Hinterkantenkamms an der Hinterkante des Rotorblattes nicht zu Steifigkeitssprüngen oder einer anderen strukturellen Beeinträchtigung.

Mit dem Hinterkantenkamm kann ein als Borsten ausgestalteter Hinterkantenkamm auf einfache Art und Weise hergestellt und montiert werden.

Die Erfindung betrifft ebenfalls ein Windenergieanlagen-Rotorblatt mit einem entsprechenden Hinterkantenkamm bestehend aus einem doppelseitigen Klebeband sowie einer Mehrzahl von pultrudierten Stäben auf einer Seite des Klebebandes. Der Hinterkantenkamm kann dann mittels der zweiten Klebeseite auf der Hinterkante des Rotorblattes platziert werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt eine schematische Darstellung eines Rotorblattes einer Windenergieanlage, und
- Fig. 3: zeigt eine schematische Darstellung eines Hinterkantenkamms für ein Rotorblatt einer Windenergieanlage.

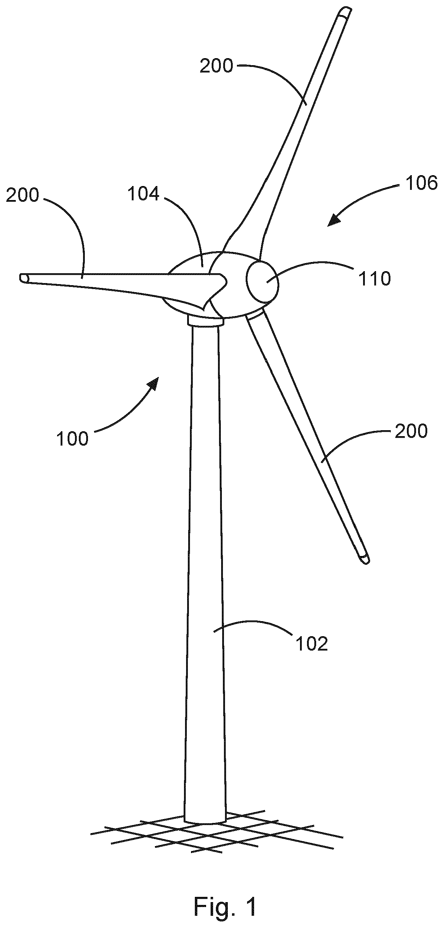

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

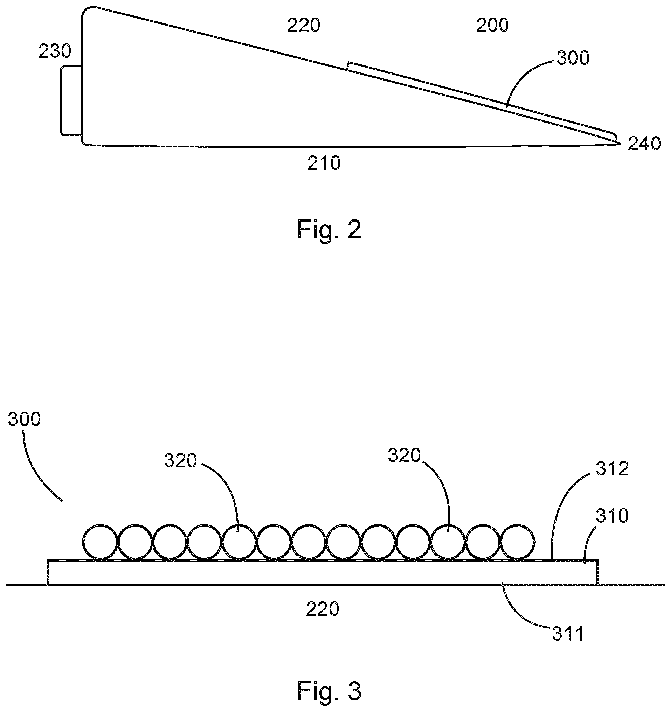

Fig. 2 zeigt eine schematische Darstellung eines Rotorblattes einer Windenergieanlage. Das Rotorblatt 200 weist eine Vorderkante 210, eine Hinterkante 220, eine Rotorblattwurzel 230 und eine Rotorblattspitze 240 auf. Im Bereich der Hinterkante 220 ist ein Hinterkantenkamm 300 vorgesehen.

Fig. 3 zeigt eine schematische Darstellung eines Hinterkantenkamms für ein Rotorblatt einer Windenergieanlage. Der Hinterkantenkamm 300 weist ein (doppelseitiges) Klebeband 310 mit einer ersten und zweiten Klebeseite oder Klebefläche 311, 312 auf. Auf der zweiten Klebeseite 312 ist eine Mehrzahl von pultrudierten Stäben 320 platziert. Die erste Klebeseite 311 dient dazu, den Hinterkantenkamm 300 an einer Hinterkante 220 der Windenergieanlage zu befestigen bzw. zu kleben.

Die Länge der Stäbe kann gleich lang sein. Alternativ dazu können die Längen der Stäbe so variieren, dass es zu einer Zackenausbildung der Stäbe (analog zu den herkömmlichen Hinterkantenkämmen) kommt. Die Länge der Stäbe kann auch zur Rotorblattspitze hin abnehmen.

Beispielsweis können die Stäbe einen Durchmesser von ca. zwischen 0,5 mm und 4 mm, vorzugsweise 1 mm aufweisen. Beispielsweise können die Stäbe 60 mm bis 100 mm, insbesondere ca. 80 mm über die Endkante hinausragen.

## Patentansprüche

1. Verfahren zum Herstellen eines Windenergieanlagen-Rotorblattes (200), welches eine Hinterkante (220) aufweist, mit den Schritten:
Herstellen eines Hinterkantenkamms (300) durch Vorsehen eines Klebebandes (310) mit einer ersten und zweiten Klebefläche (311, 312), und
Aufkleben einer Mehrzahl von pultrudierten Stäben (320) auf der zweiten Klebefläche (312) des Klebebandes (310), und
Aufkleben des Hinterkantenkamms (300) auf oder an einer Hinterkante (220) des Rotorblattes (200) mittels der ersten Klebefläche (311),
wobei das Klebeband (310), nachdem die Mehrzahl der pultrudierten Stäbe (320) auf der zweiten Klebeseite (312) platziert sind, aufgerollt wird und das aufgerollte Klebeband (310) beim Aufkleben auf die Hinterkante (220) des Rotorblattes (200) abgerollt wird.

2. Verwenden eines Windenergieanlagen-Rotorblatt-Hinterkantenkamms (300) auf einem Windenergieanlagen-Rotorblatt (200), wobei der Windenergieanlagen-Rotorblatt-Hinterkantenkamm (300) ein Klebeband (310) mit einer ersten und zweiten Klebefläche (311, 312) und eine Mehrzahl von pultrudierten Stäben (320) auf der zweiten Klebefläche (312) aufweist,
wobei die erste Klebefläche (311) dazu ausgestaltet ist, den Hinterkantenkamm (300) an einer Hinterkante eines Rotorblattes (200) aufzukleben, so dass die pultrudierten Stäbe (320) über die Hinterkante (220) hinausragen;
wobei das Klebeband (310), nachdem die Mehrzahl der pultrudierten Stäbe (320) auf der zweiten Klebeseite (312) platziert sind, aufgerollt wird und das aufgerollte Klebeband (310) beim Aufkleben auf die Hinterkante (220) des Rotorblattes (200) abgerollt wird.

## Claims

1. Method for manufacturing a wind turbine rotor blade (200) which has a trailing edge (220), comprising the steps of:
manufacturing a trailing edge comb (300) by providing an adhesive tape (310) having a first and a second adhesive surface (311, 312), and
adhering a plurality of pultruded rods (320) onto the second adhesive surface (312) of the adhesive tape (310), and
adhering the trailing edge comb (300) onto or to a trailing edge (220) of the rotor blade (200) by means of the first adhesive surface (311),
wherein the adhesive tape (310), after the plurality of pultruded rods (320) have been placed on the second adhesive side (312), is rolled up and the rolled-up adhesive tape (310) is unrolled when adhered to the trailing edge (220) of the rotor blade (200).

2. Use of a wind turbine rotor blade trailing edge comb (300) on a wind turbine rotor blade (200), wherein the wind turbine rotor blade trailing edge comb (300) has an adhesive tape (310) with a first and a second adhesive surface (311, 312) and a plurality of pultruded rods (320) on the second adhesive surface (312),
wherein the first adhesive surface (311) is configured to adhere the trailing edge comb (300) to a trailing edge of a rotor blade (200) such that the pultruded rods (320) protrude beyond the trailing edge (220);
wherein the adhesive tape (310), after the plurality of pultruded rods (320) have been placed on the second adhesive side (312), is rolled up and the rolled-up adhesive tape (310) is unrolled when adhered to the trailing edge (220) of the rotor blade (200).

## Revendications

1. Procédé de fabrication d'une pale de rotor (200) d'éolienne qui présente un bord de fuite (220), avec les étapes :
de fabrication d'une dentelure de bord de fuite (300) en prévoyant un ruban adhésif (310) avec une première et une seconde surface adhésive (311, 312), et
de collage d'une pluralité de barres pultrudées (320) sur la seconde surface adhésive (312) du ruban adhésif (310), et
de collage de la dentelure de bord de fuite (300) sur ou contre un bord de fuite (220) de la pale de rotor (200) au moyen de la première surface adhésive (311),
dans lequel le ruban adhésif (310), après que la pluralité des barres pultrudées (320) ont été placées sur la seconde face adhésive (312), est enroulé et le ruban adhésif (310) enroulé est déroulé sur le bord de fuite (220) de la pale de rotor (200) lors du collage.

2. Utilisation d'une dentelure de bord de fuite (300) de pale de rotor d'éolienne sur une pale de rotor d'éolienne (200), dans laquelle la dentelure de bord de fuite (300) de pale de rotor d'éolienne présente un ruban adhésif (310) avec une première et seconde surface adhésive (311, 312) et une pluralité de barres pultrudées (320) sur la seconde surface adhésive (312),
dans laquelle la première surface adhésive (311) est configurée pour coller la dentelure de bord de fuite (300) sur un bord de fuite d'une pale de rotor (200) de sorte que les barres pultrudées (320) dépassent du bord de fuite (220) ;
dans lequel le ruban adhésif (310), après que la pluralité des barres pultrudées (320) ont été placées sur la seconde face adhésive (312), est enroulé et le ruban adhésif (310) enroulé est déroulé sur le bord de fuite (220) de la pale de rotor (200) lors du collage.
